Europäisches Patentamt

European Patent Office

Office européen des brevets

(11) Veröffentlichungsnummer: **0 002 463**
**B1**

(12) **EUROPÄISCHE PATENTSCHRIFT**

(21) Anmeldenummer: **78101464.2**

(51) Int. Cl.³: **H 01 S 3/03**

(22) Anmeldetag: **27.11.78**

(54) Gaslaser mit einem zylinderförmigen Entladungskolben

(30) Priorität: **08.12.77 DE 2754756**

(43) Veröffentlichungstag der Anmeldung:
**27.06.79 Patentblatt 79/13**

(45) Bekanntmachung des Hinweises auf die Patenterteilung:
**20.08.80 Patentblatt 80/17**

(84) Benannte Vertragsstaaten:
**FR GB NL**

(56) Entgegenhaltungen:
**Keine**

(73) Patentinhaber: **Siemens Aktiengesellschaft Berlin
und München
Postfach 22 02 61
D - 8000 München 22 (DE)**

(72) Erfinder: **Golser, Hans
Kurt-Eisner-Strasse 22
D - 8000 München 83 (DE)
Kirschner, Erich
Severinstrasse 7
D - 8000 München 90 (DE)**

Courier Press, Leamington Spa, England.

## Gaslaser mit einem zylinderförmigen Entladungskolben

Die Erfindung betrifft einen Gaslaser mit einem zylinderderförmigen Entladungskolben, bei dem zumindest die eine Stirnseite mit einer Metallkappe abgeschlossen ist, die in ihrem Zentralbereich einen Spiegelkörper und in einer zur Kolbenlängsachse exzentrischen Lage einen metallischen Pumpstengel trägt.

Derartige Gaslaser ("Koaxial-Laser") sind bereits in einigen Versionen bekannt (DE—OS 25 06 707, DE—OS 26 04 740, "Electronics" 13. Juni 1974, S. 91 bis 95, "Bauteile Report" *14* (1976) S. 1 bis 4) und finden wegen ihres einfachen, robusten Aufbaus sowie ihres günstigen Preis/Leistungsverhältnisses zunehmend Anklang auf dem Markt. Die Praxis hat jedoch gezeigt, daß die bereits verfügbaren Koaxial-Lasertypen trotz ihrer zylindersymmetrischen Bauweise einen vielfach noch nicht ausreichend richtungsstabilen Strahl abgeben. So lassen sich beispielsweise die Anforderungen eines Bildplattenspielers an die Raumkonstanz der Ausgangsstrahlung nicht ohne weiteres erfüllen. Wollte man den Laserstrahl mit den üblichen Methoden fixieren, etwa durch Verwendung von Materialien mit einem extrem geringen thermischen Ausdehnungskoeffizienten oder durch Wahl von thermisch aufeinander abgestimmten Werkstoffen oder gar durch Einspannen des Entladungskolbens in ein formstabiles Gehäuse, so würde man feststellen, daß alle diese Zusatzvorkehrungen das charakteristische Answandern des Laserlichts während der Aufwärmperiode nur unwesentlich einschränken können. Hinzukommt, daß man mit derartigen Stabilisierungsmaßnahmen gerade den entscheidenden Vorteil von Koax-Lasern, nämlich ihre stabile, außen glatte Konstruktion und ihren geringen Preis, aufs Spiel setzt.

Aufgabe der vorliegenden Erfindung ist es, den geschilderten Gaslaser derart weiterzuentwickeln, daß er ohne besonderen Aufwand einen räumlich konstanten Ausgangsstrahl erhält, der seine Richtung auch nach einem relativ langen Betrieb und nach vielen Betriebszyklen beibehält. Hierzu wird bei einem Laser der eingangs genannten Art erfindungsgemäß vorgeschlagen, daß die Metallkappe zusätzlich mindestens ein thermisches Ausgleichselement aufweist, das bei den Betriebstemperaturen des Gaslasers die Metallkappe in gleicher Weise wie der Pumpstengel deformiert, derart, daß dessen Einfluß auf die Orientierung des Spiegelkörpers relativ zur Kolbenlängsachse wenigstens annähernd kompensiert ist. Im Normalfall reicht ein einziges, radialsymmetrisch zum Pumpstengel angeordnetes Ausgleichselement aus; bei Bedarf kann man aber auch zwei oder mehr Ausgleichselemente verwenden, die dann zusammen wie ein dem Pumpstengel gegenüberliegender, die Kappe gleichartig deformierender Kompensator wirken müssen.

Die Erfindung geht von folgender Beobachtung aus: Setzt man einen Koax-Laser in Betrieb, so wandert der Laserstrahl mit zunehmender Erwärmung der Röhre aus, bis er kurze Zeit nach Erreichen der Endtemperatur zu seinem Auslenkungsmaximum gelangt. Aus dieser Position kehrt der Strahl dann wieder etwas zurück, bevor er endgültig zur Ruhe kommt. Die Auswanderungsrichtung fällt, wie durch Versuche bestätigt werden konnte, bemerkenswerter Weise stets zusammen mit der Richtung, in der der exzentrisch gelagerte Pumpstengel von der Kolbenachse aus gesehen liegt. In der Tat ist die Strahlschwankung im wesentlichen auf den bisher stets übersehenen oder doch als vernachlässigbar übergangenen Umstand zurückzuführen, daß der Pumpstengel für die Metallkappe eine asymmetrische thermische Belastung, darstellt, die die Kappe verzieht und damit letztlich den Spiegelkörper verkippt. Erfindungsgemäß wird nun die Störquelle nicht etwa — beispielsweise durch Verlegung des Pumpstengels oder durch Materialanpassung — beseitigt, sondern es wird lediglich ihre Deformationswirkung durch ein geeignet plaziertes und gestaltetes Ausgleichselement aufgehoben. Eine solche Kompensation läßt sich bequem realisieren und verlangt nur einen geringfügigen Eingriff in bereits laufende Serienfertigungen.

Vorteilhafte Ausgestaltungen und Weiterbildungen der Erfindung sind Gegenstand zusätzlicher Ansprüche.

Die Erfindung soll nun anhand zweier besonders bevorzugter Ausführungsbeispiele unter Bezugnahme auf die beigefügte Zeichnung näher erläutert werden. In den Figuren der Zeichnung sind einander entsprechende Teile mit gleichen Bezugszeichen versehen. Es zeigen:

Fig. 1 in einem Seitenschnitt ein erstes Ausführungsbeispiel und

Fig. 2 in einem teilweise weggebrochenen Seitenschnitt ein weiteres Ausführungsbeispiel.

Für die Erfindung nicht unbedingt erforderliche Einzelteile eines Gaslasers, beispielsweise die elektrischen Zuleitungen, sind der Übersicht halber nicht eingezeichnet.

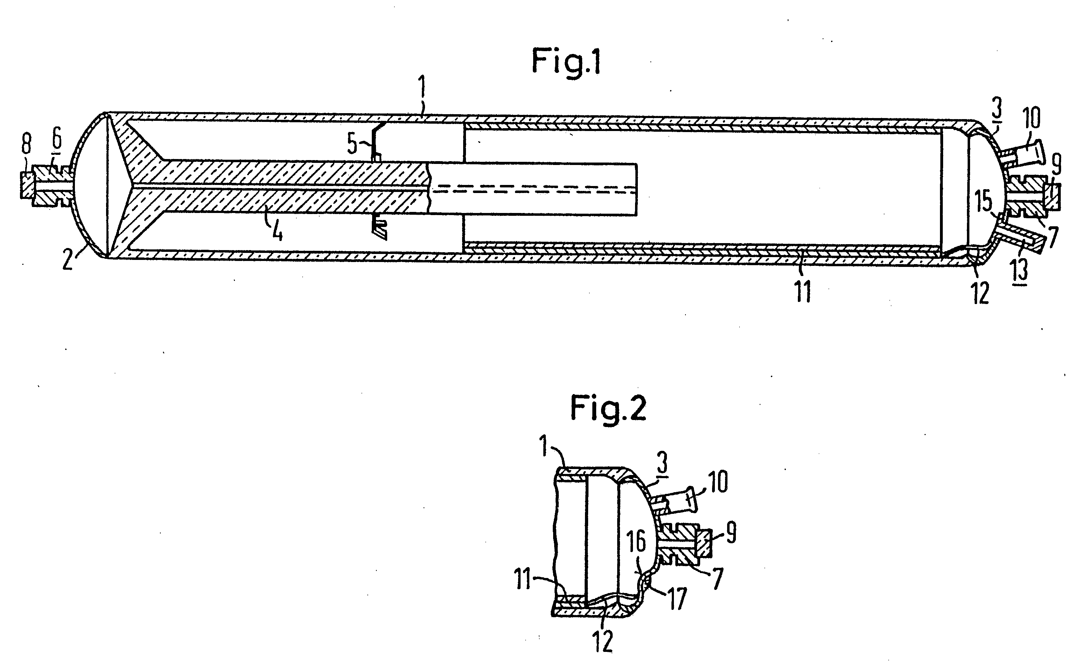

Der Gaslaser der Fig. 1 ist für einen Bildplattenspieler vorgesehen. Sein Entladungskolben besteht im Einzelnen aus einem zylindrischen Glasmantel 1, der an seinen beiden Enden mit je einer angeschmolzenen Metallkappe (bodenseitige Metallkappe 2, stirnseitige Metallkappe 3) vakuumdicht verschlossen ist. Der Glasmantel 1 umgibt konzentrisch eine aufgetrichterte und an ihrem bodenseitigen Ende angeschmolzene Glaskapillare 4. Die Kapillare 4, die übrigens im Einzelfall auch aus Keramik bestehen könnte, wird aus Stabilitätsgründen durch mindestens eine Feder 5 abgestützt. Beide Metallkappen des Entladungskolbens enthalten je eine zentrale Öffnung, in die jeweils ein ebenfalls aus Metall bestehendes Teil (Spiegelfassung 6,7) eingesetzt und festgelötet ist. Jede Spiegelfassung trägt ihrerseits einen Spiegelkörper 8,9, mit den sie über ein Glaslot hermetisch dicht verbunden ist. Die Wandung jeder Spielgelfassung ist zu Justierzwecken in einer Zone geschwächt und kann dort plastisch verformt werden. Als Kathode für die Gasentladung dient im vorliegenden Fall ein gerolltes Al-Blech 11, das sich durch Federwirkung dem Glasmantel von innen anlegt. Die Kathode ist über eine Zuleitung 12 mit der stirnseitigen Metallkappe 3 verbunden, eine spezielle Kathodendurchführung entfällt. Die Anode wird durch die bodenseitige Spiegelfassung 6 gebildet. Bei sorgfältigem Aufbau und genügend hoher Ausheiztemperatur ist ein Getter nicht unbedingt erforderlich. Die stirnseitige Metallkappe nimmt neben der Spiegelfassung noch einen Pumpstengel 10 sowie ein Ausgleichselement auf. Das Ausgleichselement ist radialsymmetrisch zum Pumpstengel plaziert und besteht im vorliegenden Fall aus einem bodenseitig abgeschlossenen Röhrchen ("Stutzen") 13. Der Figur entnimmt man, daß das Röhrchen an seinem in den Entladungskolben ragenden Ende einen Flansch 15 enthält, der seinerseits die Zuleitung 12 kontaktiert.

Bei der geschilderten Ausführung sind folgende Materialien verwendet: Der Mantel besteht aus einem Hartglas, die Metallkappen aus Vacon, einer Ni-Fe- oder Ni-Fe-Co-haltigen Einschmelzlegierung der Pumpstengel und der Ausgleichsstutzen aus Kupfer. Der Kolben ist mit einem He-Ne-Gemisch gefüllt (Mischungsverhältnis zwischen 6:1 und 10:1, Fülldruck zwischen 2.66 und 5.32 mbar). Der Gaslaser läßt sich mit folgenden elektrischen Werten betreiben: Zündspannung 5 bis 6 kV, Anodenspannung etwa 1 kV, Anodenstrom bis 6 mA; Vorwiderstand mindestens 60 kOhm. Die Ausgangsleistung liegt dann zwischen 1 und 2 mW.

Das Ausführungsbeispiel der Fig. 2 unterscheidet sich von der bereits geschilderten Ausführung lediglich darin, daß anstelle des Ausgleichsstutzens die Kappe am gleichen Ort eine Vertiefung 16 enthält und daß in dieser Vertiefung eine Lotmasse 17 angehäuft ist.

Die folgende Tabelle enthält Meßergebnisse, die bei einem Vergleich zwischen einem Koaxial-Gaslaser herkömmlicher Bauart mit erfindungsgemäß ausgebildeten Gaslasern gewonnen wurden. Es standen sich die folgenden Ausführungen gegenüber:

Version I (Spalte 1) bestand aus dem in der zitierten Literaturstelle "Bauteile Report" beschriebenen Modell LGR 7621 mit Vacon-Kappen und einem Kupfer-Pumpstengel. Die Version II der Spalte 2 unterschied sich von der Version I lediglich darin, daß der Kupfer-Pumpstengel durch einen Vacon-Pumpstengel ausgetauscht war. Die in Spalte 3 aufgeführte Version III wich von der Version I darin ab, daß die Metallkappe neben dem Pumpstengel zusätzlich noch einen stutzenförmigen Kupfer- "Pumpstengel" als Ausgleichselement enthielt. Die Version IV (Spalte 4) ist darin anders als die Version II, als in ihre Kappe zusätzlich ein Vacon-Stutzen als Ausgleichselement eingebracht war. Alle vier Laserröhren wurden jeweils von 20°C auf 80°C, der Betriebstemperatur im Bildplattenspieler, in einem Ofen erwärmt. Die Meßebene, in der das Auswandern des Laserstrahls registriert wurde, befand sich in einem Abstand von 25 mm vom Auskoppelspiegel. Aufgezeichnet wurde einmal das Ablenkungsmaximum (Zeile 1), ferner die Ablenkung zwischen dem Anfangsort und der Strahlposition nach Erreichen der Endtemperatur (Zeile 2) und schließlich der Abstand zwischen derjenigen Position, die die Laserröhre nach ihrer Zündung aufgrund der Eigenerwärmung (ca. 40° bei ungehinderter Wärmeabgabe an die Umgebung) einnimmt, und der Lage nach Erwärmung der Röhre auf 80°C im Ofen.

|  | LGR 7621 1 Cu- Pumpsten- gel | LGR 7621 1 Vacon- Pumpsten- gel | LGR 7621 2 Cu- Pumpsten- gel | LGR 7621 2 Vacon- Pumpsten- gel |
|---|---|---|---|---|
| größte Abweichung bei Erwärmung (80 °C) | 115μ | 100μ | 75μ | 80μ |
| Unterschied zwischen An- fangslage (20 °C) Endlage (80 °C) | 100μ | 50μ | 40μ | 36μ |
| Unterschied zwischen den Endlagen bei Eigenerwärmung (ca. 40 °C) und Erwärmung auf 80 °C | 75μ | 20μ | 9μ | 5μ |

Der Tabelle entnimmt man, daß die Version mit zwei Kupferröhrchen eine Verbesserung gegenüber einer Ausführung mit nur einem Pumpstengel bedeutet. Bestehen die beiden Röhrchen auch noch aus einem an die Metallkappe thermisch angepaßten Material, so erhält man die besten Resultate. Dabei zeigt es sich, daß die Version IV zwar zunächst einen etwas größeren Ausschlag als die Version III hat, im stabilisierten Zustand jedoch der Ausgangslage am nächsten kommt und in diesem Zustand auch am unempfindlichsten gegen Änderungen in der Betriebstemperatur ist.

Die Erfindung beschränkt sich nicht auf die dargestellten Ausführungsbeispiele. So bleibt es dem Fachmann im Rahmen der Erfindung überlassen, welche Form er dem vorgeschriebenen Ausgleichselement gibt. Im vorliegenden Zusammenhang kommt es nämlich lediglich darauf an, den Einfluß des Pumpstengels der sich bei Erwärmung des Entladungskolbens bemerkbar macht, durch einen (radial- symmetrisch auf der Kappe angebrachten) durch ein oder mehrere Elemente gebildeten Kompensator auszubalancieren. So könnte man beispielsweise daran denken, den Stutzen in das Innere des Kolbens hineinragen zu lassen oder die Kappe mit zwei sich gegenüberliegenden identischen Pumpstengeln zu versehen. Im Einzelfall kann es auch sinnvoll sein, zusätzlich die Verbindungsstelle zwischen der Kappe und dem Stengel aus der Kappenebene herauszuziehen, etwa mittels eines thermisch an die Kappe angepaßten Übergangsteils (Beispiel: Vacon- Kappe, Vacon-Übergangsteil, Cu-Stengel).

**Patentansprüche**

1. Gaslaser mit einem zylinderförmigen Entladungskolben, bei dem zumindest eine Stirnseite mit einer Metallkappe abgeschlossen ist, die in ihrem Zentralbereich einen Spiegelkörper und in einer zur Kolbenlängsachse exzentrischen Lage einen metallischen Pumpstengel trägt, dadurch gekennzeichnet, daß die Metallkappe (3) zusätzlich mindestens ein — vor- zugsweise radial-symmetrisch zum Pump- stengel (10) angeordnetes — thermisches Aus- gleichselement (13, 16, 17) aufweist, das bei den Betriebstemperaturen des Gaslasers die Metallkappe (3) in gleicher Weise wie der Pumpstengel (10) deformiert, derart, daß dessen Einfluß auf die Orientierung des Spiegelkörpers (9) relativ zur Kolbenlängsachse wenigstens annähernd kompensiert ist.

2. Gaslaser nach Anspruch 1, dadurch gekennzeichnet, daß das Ausgleichselement (13) aus dem gleichen Metall wie der Pumpstengel (10) besteht.

3. Gaslaser nach Anspruch 2, dadurch gekennzeichnet, daß der Mantel (1) des Entladungskolbens aus Glas, die Metallkappe (3) aus einer Ni-Fe- oder Ni-Fe-Co-haltigen Einschmelzlegierung und der Pumpstengel (10) sowie das Ausgleichselement (13) aus Kupfer bestehen.

4. Gaslaser nach Anspruch 1 oder 2, dadurch gekennzeichnet, daß der Pumpstengel (10) aus dem gleichen Metall wie die Metallkappe (3) besteht.

5. Gaslaser nach Anspruch 4, dadurch gekennzeichnet, daß der Mantel (1) des Entladungskolbens aus Glas und die Metallkappe (3), der Pumpstengel (10) sowie das Ausgleichselement (13) aus der Ni-Fe- oder Ni-Fe-Co-haltigen Einschmelzlegierung bestehen.

6. Gaslaser nach einem der Ansprüche 1 bis 5, dadurch gekennzeichnet, daß das Ausgleichselement (13) im wesentlichen die gleiche Form wie der Pumpstengel (10) hat.

7. Gaslaser nach Anspruch 6, dadurch gekennzeichnet, daß das Ausgleichselement ein bodenseitig abgeschlossenes Röhrchen ("Stutzen" 13) ist.

8. Gaslaser nach Anspruch 6, dadurch gekennzeichnet, daß das Ausgleichselement (13) ebenfalls ein Pumpstengel ist.

9. Gaslaser nach Anspruch 1, dadurch gekennzeichnet, daß das Ausgleichselement durch eine mit einer Lotmasse (17) versehene Vertiefung (16) in der Metallkappe gebildet ist.

10. Gaslaser nach einem der Ansprüche 1 bis 9, dadurch gekennzeichnet, daß die Metallkappe (3) mit dem Pumpstengel (10) über ein Übergangsteil verbunden ist, das vorzugsweise aus dem gleichen Material wie die Metallkappe (3) besteht.

## Claims

1. Gas laser having a cylindrical discharge vessel, wherein at least one end thereof is sealed with the aid of a metal cap which carries a mirror body in its central area and a metal pump tube in a position which is eccentric relative to the longitudinal axis of the vessel, characterised in that the metal cap (3) is additionally provided with at least one thermal equalizing element (13, 16, 17) — preferably arranged in a radially symmetric relationship to the pump tube (10) relative to the vessel axis, which equalizing element deforms the metal cap (3) in substantially the same fashion as the pump tube (10) at the operating temperatures of the gas laser to at least approximately mutually compensate any influence on the orientation of the mirror body (9) relative to the longitudinal axis of the vessel.

2. Gas laser as claimed in Claim 1, characterised in that the equalizing element (13) consists of the same metal as the pump tube (10).

3. Gas laser as claimed in Claim 2, characterised in that the casing (1) of the discharge vessel consists of glass, the metal cap (3) of a fusible alloy containing Ni-Fe or Ni-Fe-Co and both the pump tube (10) and the equalizing element (13) of copper.

4. Gas laser as claimed in Claim 1 or 2, characterised in that the pump tube (10) consists of the same material as the metal cap (3).

5. Gas laser as claimed in Claim 4, characterised in that the casing (1) of the discharge vessel consists of glass and the metal cap (3), the pump tube (10) and the equalizing element (13) of a fusible alloy containing Ni-Fe or Ni—Fe—Co.

6. Gas laser as claimed in one of Claims 1 to 5, characterised in that the equalizing element (13) has substantially the same form as the pump tube (10).

7. Gas laser as claimed in Claim 6, characterised in that the equalizing element is a tube ("connecting piece" 13) which is sealed at its end.

8. Gas laser as claimed in Claim 6, characterised in that the equalizing element (13) is a further pump tube.

9. Gas laser as claimed in Claim 1, characterised in that the equalizing element is formed by means of a recess (16) in the metal cap which is provided with a mass of solder (17).

10. Gas laser as claimed in one of claims 1 to 9, characterised in that the metal cap (3) is connected with the pump tube (10) by a transition member, which preferably consists of the same material as the metal cap (3).

## Revendications

1. Laser à gaz comportant une enceinte cylindrique à décharge, dont au moins une face frontale est fermée par un capuchon métallique, qui porte un miroir dans sa partie centrale et une petite tige métallique de pompage dans une position excentrée par rapport à l'axe longitudinal de l'enceinte, caractérisé par le fait que le capuchon métallique (3) comporte en supplément au moins un organe thermique de compensation (13, 16, 17) — disposé de préférence en position diamétralement symétrique à la tige de pompage (10) —, qui, pour les températures de fonctionnement du laser à gaz, déforme le capuchon métallique (3) de la même manière que la tige de pompage (10), de sorte que l'influence de la tige de pompage sur l'orientation du miroir (9) par rapport à l'axe longitudinal de l'enceinte est au moins approximativement compensée.

2. Laser à gaz suivant la revendication 1, caractérisé par le fait que l'organe de compensation (13) est constitué par le même métal que la tige de pompage (10).

3. Laser à gaz suivant la revendication 2, caractérisé par le fait que l'enveloppe (1) de l'enceinte à décharge est en verre, que le capuchon métallique (3) est constitué par un alliage de scellement contenant du Ni-Fe ou du Ni—Fe—Co, et que la tige de pompage (10) ainsi que l'organe de compensation (13) sont en cuivre.

4. Laser à gaz suivant l'une des revendications 1 ou 2, caractérisé par le fait que la tige de pompage (10) est constituée par le même métal que le capuchon métallique (3).

5. Laser à gaz suivant la revendication 4, caractérisé par le fait que l'enveloppe (1) de l'enceinte à décharge est en verre et que la capuchon métallique (3), la tige de pompage (10) ainsi que l'organe de compensation (13) sont constitués par un alliage de scellement contenant du Ni-Fe ou du Ni-Fe-Co.

6. Laser à gaz suivant l'une quelconque des revendications 1 à 5, caractérisé par le fait que l'organe de compensation (13) possède essentiellement la même forme que la tige de pompage (10).

7. Laser à gaz suivant la revendication 6, caractérisé par le fait que l'organe de compensation est un petit tube ("tubulure" 13) fermé au niveau de son fond.

8. Laser à gaz suivant la revendication 6, caractérisé par le fait que l'organe de compensation (13) est également une tige de pompage.

9. Laser à gaz suivant la revendication 1, caractérisé par le fait que l'organe de compensation est formé par un renfoncement (16) ménagé dans le capuchon métallique et muni d'une masse de soudure (17).

10. Laser à gaz suivant l'une quelconque des revendications 1 à 9, caractérisé par le fait que le capuchon métallique (3) est relié à la tige de pompage (10) par l'intermédiaire d'une pièce de jonction qui est constituée de préférence par le même matériau que le capuchon métallique (3).

Fig.1

Fig.2

0002 463